# EUROPEAN PATENT SPECIFICATION

(11) **EP 3 045 051 B1**
(45) Date of publication and mention of the grant of the patent: **12.12.2018**
(21) Application number: 16151059.9
(22) Date of filing: 13.01.2016
(51) Int. Cl.: A23L 3/34, A01N 43/50, A23B 4/14

(54) **COMPOSITION FOR IMPROVING FLAVOR OF AND INHIBITING GROWTH OF PATHOGENIC BACTERIA IN POULTRY**
ZUSAMMENSETZUNG ZUR VERBESSERUNG DES GESCHMACKS UND DER HEMMUNG DES WACHSTUMS VON PATHOGENEN BAKTERIEN IN GEFLÜGEL
COMPOSITION POUR AMÉLIORER LA SAVEUR ET INHIBER LA CROISSANCE DE BACTÉRIES PATHOGÈNES CHEZ LA VOLAILLE

(30) Priority: 13.01.2015 US 201514595298
(43) Date of publication of application: 20.07.2016
(73) Proprietor: Gum Products International Inc., Newmarket, ON L3Y 8T7 (CA)
(72) Inventor: SANDRA, Sandra, KESWICK, Ontario L4P 4G9 (CA); LIU, Henry, RICHMOND HILL, Ontario L4B 3B7 (CA)
(74) Representative: Lavoix

(56) References cited:
- US-A1- 2011 177 229
- LAVIERI NA ET AL.: "Control of Listeria monocytogenes on Alternatively Cured Ready-to-Eat Ham Using Natural Antimicrobial Ingredients in Combination with Post- Lethality Interventions", FOOD PROCESSING AND TECHNOLOGY, 1 January 2015 (2015-01-01), pages 1-7, XP002755408,
- SEBRANEK J G ET AL: "Beyond celery and starter culture: Advances in natural/organic curing processes in the United States", MEAT SCIENCE, ELSEVIER SCIENCE, GB, vol. 92, no. 3, 1 March 2012 (2012-03-01), pages 267-273, XP028504023, ISSN: 0309-1740, DOI: 10.1016/J.MEATSCI.2012.03.002 [retrieved on 2012-03-08]
- DIVEK V T NAIR ET AL: "Antimicrobial efficacy of lauric arginate against Campylobacter jejuni and spoilage organisms on chicken breast fillets", POULTRY SCIENCE, CHAMPAIGN, IL, US, 1 January 2014 (2014-01-01), pages 2636-2640, XP009189034, ISSN: 0032-5791

## Description

### FIELD OF THE INVENTION

The present invention relates to compositions and methods for inhibiting growth of pathogenic bacteria in poultry and improving the shelf life of the poultry.

### BACKGROUND OF THE INVENTION

Food preservation is a major challenge for food industry and associated retail outlets to insure consumer safety. Besides food discoloration and loss of flavor, shelf life associated with microbial spoilage is a serious issue. Approaches to food preservation are generally designed to enhance the shelf life of packaged products. Process improvements such as washing and carefully controlled low temperature processing are now routine in the food industry. Modified atmosphere packaging (MAP) has also improved microbial shelf life of fresh products. Some processors have begun treating poultry with ionizing radiation to extend the microbial shelf life of the products. The irradiation process is an effective method for controlling microorganisms, but many consumers are wary of its use. Synthetic chemicals are also widely used to retard the growth of pathogenic bacteria. Antimicrobials chemicals listed in FSIS Directive 7120.1 and approved as ingredients of food preservatives include acidified sodium chlorite, chlorine dioxide, lauramide arginine ethyl ester, sodium hypochlorite, sodium metasilicate, and trisodium phosphate. However, many of these chemicals are not consumer-friendly and can impart off-flavor for food products.

A recent trend in the food industry is the removal of ingredients that may not be considered consumer-friendly and substituting the ingredients that can be considered natural. There is an increase in consumer demand for natural preservatives or clean label due to the distrust of chemical sounding additives, and consumers believe that natural means better for their health. The general practice in food plants are using rinse or wash solution that can include a variety of chemical compounds, including solutions containing chlorine, peroxyacetic acid, cetylpyridium chloride, lactic acid and others.

Natural ingredients including plant extracts have been investigated for their antimicrobial activities in food preservation. In particular, plant extracts are often used in conjunction with irradiation.

A need remains, therefore, for economical and effective methods of food preservation that not only provide safety but also improve the flavor profile of the food product. A particular challenge for inhibiting both gram positive bacteria and gram negative bacteria is the application of natural ingredients with minimal mechanical intervention such as irradiation and modified atmosphere packaging. Some pathogens present in raw poultry are *Salmonella* and *Campylobacter spp*. Laviera et al. (Control of Listeria monocytogenes on alternatively cured ready-to-eat ham using natural antimicrobial ingredients in combination with post-lethality interventions, Food Processing and Technology, January 1, 2018, pages 1-7) concerns vinegar but not buffered vinegar.

US 2011/177229 discloses a combination of LAE and liquid smoke.

Sebranek et al. (Beyond celery and starter culture: Advances in natural/organic curing processes in the United States, Meat Science, vol.92, no.3, March 2012, pages 267-273) relates to antimicrobial compounds such as vinegar or buffered vinegar but does not mention LAE. Moreover, this document does not suggest the use of liquid smoke on poultry.

### SUMMARY OF THE INVENTION

The present invention provides an antimicrobial composition for treating poultry to attain a longer shelf life, and a method of using the composition as a natural food preservative, the composition comprising buffered vinegar (BV) and lauramide arginine ethyl ester (LAE), wherein the ratio of BV to LAE is between 10%-90% by wt. BV and 0.2%-10% by weight LAE, the rest is water.

Both LAE and BV are label-friendly and food-approved ingredients, thus eliminating the need to seek regulatory approvals.

The application of this composition to poultry can surprisingly extend shelf life of the poultry, as well as inhibit the growth of both gram positive and gram negative pathogenic bacteria, including but not limited to lactic bacteria, *Listeria monocytogenes*, *Clostridium botulinum*, *Escherichia coli* (O157:H7 and others), *Salmonella spp*., and *Staphylococcus aureus.*

In a further aspect of the invention there is provided a treated poultry food product which exhibits a longer shelf life.

### BRIEF DESCRIPTION OF THE DRAWINGS

Fig. 1 shows in vitro results of MV and MV+ against *Salmonella Enteritidis*, *Salmonella Typhimurium*, *Listeria monocytogenes*, and *Escherichia coli* for 24 hours at 37°C.
Fig. 2 shows *Salmonella Typhimurium* and *E. coli* counts after dipping of chicken thigh with skin (time zero).
Fig. 3 shows Total plate count (TPC) and Lactic acid bacteria (LAB) of raw chicken leg quarter as a function of refrigeration storage time.
Fig. 4 shows *Salmonella Typhimurium* counts as a function of refrigeration storage time of raw chicken leg quarter.
Fig. 5 is a photograph of uninoculated chicken leg quarter after 7 days of refrigerated storage (Control).
Fig. 6 is a photograph of uninoculated chicken leg treated with MV+.

### DETAILED DESCRIPTION OF THE INVENTION

The present invention provides compositions and methods for treating poultry comprising ingredients derived from natural sources that exhibit excellent antimicrobial effects such that the safety and shelf life of poultry food products are substantially improved. The present invention also provides a method of food preservation that results in safe, high quality food, which is more economical than current methods using radiation.

The term "food product" or "poultry" may include any form of bird kept, harvested, or domesticated for meat and/or eggs.

The term "food preservation" as used herein refers to methods which maintain or enhance food safety, for example, by controlling the growth and proliferation of pathogenic and spoilage micro-organisms, thus guarding against food poisoning and delaying or preventing food spoilage. Food preservation helps food remain safe for consumption for longer periods of time (i.e. improves the shelf life) and inhibits or prevents nutrient deterioration and/or organoleptic changes which cause food to become less palatable.

The term "pathogenic bacteria" as used herein refers to both gram positive and gram negative bacteria that are capable of causing disease or illness in an animal or a human, for example, by the production of endotoxins, or by the presence of a threshold level of micro-organisms so as to cause food poisoning, or other undesirable physiological reactions in humans or animals. Non-limiting examples of pathogenic bacteria include *Listeria monocytogenes*, *Clostridium botulinum*, *Escherichia coli* (O157:H7 and others), *Salmonella spp*., and *Staphylococcus aureus.* The term "shelf life" as used herein refers to the period of time that a food product such as poultry remains saleable or fit for consumption to retail customers. For example, raw poultry whole or parts can be stored in home refrigeration for 1-2 days. Micro-organisms present on poultry products after this time period may have proliferated to a great extent and/or have generated unacceptable levels of undesirable by-products. Spoilage micro-organisms may also act to discolor poultry, making such poultry unappealing and undesirable for human consumption. Pathogenic bacteria may have proliferated in this time period to a level wherein they are capable of causing disease in a consumer of the poultry.

The term "treating" as used herein refers to means of processing a food product such as poultry, including, for example, applying or adding the composition of the present invention to a non-standardized RTE comminuted meat products and standardized RTE comminuted meat products that permit the use of any safe and suitable antimicrobial agent, RTE meat and poultry products, raw pork sausage, RTE ground poultry sausage, ground poultry, ground beef, and washing poultry carcasses or cuts with the composition or applying it to the inside of the package or the product surfaces. Applying the composition to food products includes, but is not limited to, injection, vacuum tumbling, brushing, spraying, or dipping.

The term "vinegar" by itself as used herein refers to un-buffered vinegar which can be prepared by any known process or provided from any source.

"Buffered vinegar" (BV) refers to a composition prepared by mixing a vinegar with sodium carbonate, sodium bicarbonate, potassium carbonate, potassium bicarbonate, any known agents for buffering, or by any known process for preparing a buffered solution. Sodium carbonate, sodium bicarbonate, potassium carbonate, potassium bicarbonate, and other known agents for preparing the buffered vinegar can be used alone or in combination. In some embodiments of the present invention, the preparation of the buffered vinegar does not involve heating or evaporation. In some embodiments, the resulting buffered vinegar is further condensed.

The pH of the resulting buffered vinegar is determined by the Henderson-Hasselbach equation as follows: pH=pKa+log (sodium acetate/acetic acid).

Procedures for adjusting the pH of a buffered vinegar are well known.

The vinegar used to prepare BV can be prepared by any known process or provided from any source. Representative strains of acetic acid bacteria includes, for example, *Acetobacter aceti* and *Gluconobacter suboxydans* [Saeki et al., Development of thermotolerant acetic acid bacteria useful for vinegar fermentation at higher temperatures, Biosci. Biotech. Biochem., 61 (1), 138-145, 1997]. In some embodiments, vinegar obtained from the natural fermentation of *Acetobacter aceti* is used to prepare buffered vinegar. In some embodiments, vinegar is obtained from a commercial source.

Production and composition of vinegar are readily available in the literature, including for example Martin R Adams, VINEGAR, Encyclopedia of Food Microbiology, 1999, 2258-2263, and Bulletin of the International Dairy Federation 455/2012, the entire disclosures of which are herein incorporated by reference. Vinegar has been used as a preservatives in many years. It is considered GRAS (21 CFR 184.1005). The mechanism of action of vinegar is based on the undissociated form going through the microbial membrane and lower the pH of the cytoplasm that can lead to damage or modification of enzyme, structural proteins and DNA. Lauramide Arginine Ethyl Ester (LAE) is an FDA approved antimicrobial for use on fresh cuts of meat and poultry at a rate not higher than 200 ppm by weight in the final product. It is considered GRAS (notice no 000164). It has a broad antimicrobial activity. The mechanism of action is related to the modification of cytoplasmic membrane that alter bacteria metabolic processes that cause inhibition.

The composition of the present invention comprises buffered vinegar (BV) and lauramide arginine ethyl ester (LAE), wherein the ratio of BV to LAE is between 10%-90% by wt. BV and 0.2%-10% by weight LAE, the rest is water.

The range of ratios when applying the composition of the present invention to the food product depends on factors including the type of the food product, the intended sensory effect, the extended shelf life, the level of pathogen reduction or inhibition as well as protection against post-treatment contamination, and can be readily determined by one of ordinary skill in the art without undue experimentation.

We have discovered the BV-LAE composition to be a surprisingly effective antimicrobial composition for enhancing the shelf life of poultry.

As is known in the art, shelf life can be evaluated by determining the length of time a food product can be stored before the content of micro-organisms or pathogenic bacteria reaches a certain threshold. For example, the appropriate threshold for certain bacteria is when the bacterial count in the food product reaches 7 log.

### EXAMPLES

To gain a better understanding of the invention described herein, the following examples are set forth.

### Example 1 - Testing the antimicrobial effects of the antimicrobial composition

A composition consisting of a mixture of BV and LAE was prepared. The antimicrobial tested was Mulled vinegar 6.2 (MV6.2) and MV+. The concentration tested was 5% MV6.2 in water, 25% MV+ and 50% MV+.

Bacterial culture tested for in vitro broth study:
*Listeria monocytogenes* serotype 4b ATCC 19115
*Salmonella enterica*, *subsp. Enterica. Serovar Enteritidis* ATCC 13076
*Salmonella enterica.* Subsp. *Enterica. Serovar Typhimurium* ATCC 14028
*Escherichia coli* ATCC 9637

100 µL of bacterial culture in 20% glycerol stock was put into 25 mL of recommended media by ATCC for the specific culture and incubated overnight at 200 rpm, 37°C. The overnight culture was about 10⁷ CFU/mL.

The ASTM International method E2315-03 was followed for the time kill study with the following modification: the inoculum added was 1 mL to 10 mL of test solution. The time studies was time 0 and 24 hours (after storage at 37°C).

The serial dilution was done in Butterfield's phosphate buffer. XLD (Xylose Lysine Deoxycholate) agar was used for *Salmonella* enumeration, Nutrient agar was used for *E. coli* enumeration, and BHI (Brain Heart Infusion) agar was used for *Listeria monocytogenes.* Each treatment was done once and each sample was plated in duplicates.

### Example 2 - Testing on Raw Chicken Parts

In an in vitro experiment, MV+ was found to kill *L. monocytogenes*, *E*. *coli*, *Salmonella Enteritidis* and *Salmonella Typhimurium* and was found to reduce the amount of *Salmonella* in raw chicken parts after dipping on day 0 by about 2 log. MV+ dipping can be used to increase shelf life by inhibiting growth of total aerobic bacteria and lactic acid bacteria. After 7 days of refrigeration storage, there was a difference of 2.3 log of total aerobic bacteria and a difference of 2.7 log of lactic acid bacteria between control and treated samples.

### Example 3 - Testing on Chicken Thighs

bacterial culture was prepared as follows:
*Salmonella enterica.* Subsp. *Enterica. Serovar Typhimurium* ATCC 14028
*Escherichia coli* ATCC 9637.

200 µL of culture was put into 25 mL of freshly made nutrient broth for the specific culture and incubated overnight at 150 rpm, 37+/-2°C. The overnight culture was about 10⁸ CFU/mL, which was then diluted in nutrient broth to obtain target inoculum on chicken to be 10³ CFU/gram chicken. 0.5 mL of inoculum was added to the chicken and then massaged for 30 seconds and kept in refrigeration for about 20 minutes for attachment of bacteria.

Chicken thighs with skin were bought from local store on the day before the experiment and kept at refrigeration temperature until use. Uninoculated and untreated (no dip) control was tested for total plate count, *Salmonella Typhimurium* and *E. coli* to see the background flora. Inoculated samples were dipped in water (control) or 50%MV+ (treatment) for one minute at room temperature, then drained for about 15 seconds and then transferred to a sterile bag. The sample was massaged for one minute in about 100 grams of BPW (buffered peptone water) prior to serial dilution. The serial dilution was done in Butterfield's phosphate buffer. XLD agar was used for *Salmonella* enumeration, while EMB (Eosin Methylene Blue) agar was used for *E*. *coli* enumeration. The plates were incubated for 24+/-3 hours at 37+/-2°C. Each treatment was done in duplicate samples and each sample was plated in duplicates.

### Example 4 - Chicken Leg Quarters Treatment

200 microL of *Salmonella enterica. Subsp. Enterica. Serovar Typhimurium* ATCC 14028 culture was put into 25 mL of freshly made nutrient broth for the specific culture and incubated overnight at 150 rpm, 37+/-2°C. The overnight culture was about 10⁸ CFU/mL, which was then diluted in nutrient broth to obtain target inoculum on chicken to be 10³ CFU/gram chicken. 0.6 mL of inoculum was added to the chicken and then massaged for 30 seconds and kept in refrigeration for about 20 minutes for attachment of bacteria.

Chicken leg quarters with skin were bought from local store on the day before the experiment and kept at refrigeration temperature until use. Uninoculated dipped control and MV+ were tested for total plate count (TPC), and lactic acid bacteria (LAB) to determine shelf life. Samples were inoculated with overnight culture to reach target of 10²-10³ CFU/g chicken. The inoculated chicken were massaged for 30 seconds and left in refrigeration for 20 minutes for bacterial attachment. Inoculated samples were dipped in water (control) or 50%MV+ (treatment) for one minute at room temperature, then drained for about 60 seconds and then transferred to a sterile bag. The sample was massaged for one minute in about 200 grams of BPW (buffered peptone water) prior to serial dilution. Each bag of chicken quarter was heat sealed (under normal atmosphere) and kept in refrigeration until use. Periodic samples were taken during storage. The serial dilution was done in Butterfield's phosphate buffer. XLD agar was used for *Salmonella* enumeration. 3M aerobic plate count petrifilm was used to enumerate TPC and LAB. Dilution was done in MRS broth for LAB and the plates were incubated in anaerobic condition. Incubation for TPC and LAB enumeration was 48+/-4 hours at 37+/-2°C. Each treatment was done in triplicates and each sample was plated in duplicates.

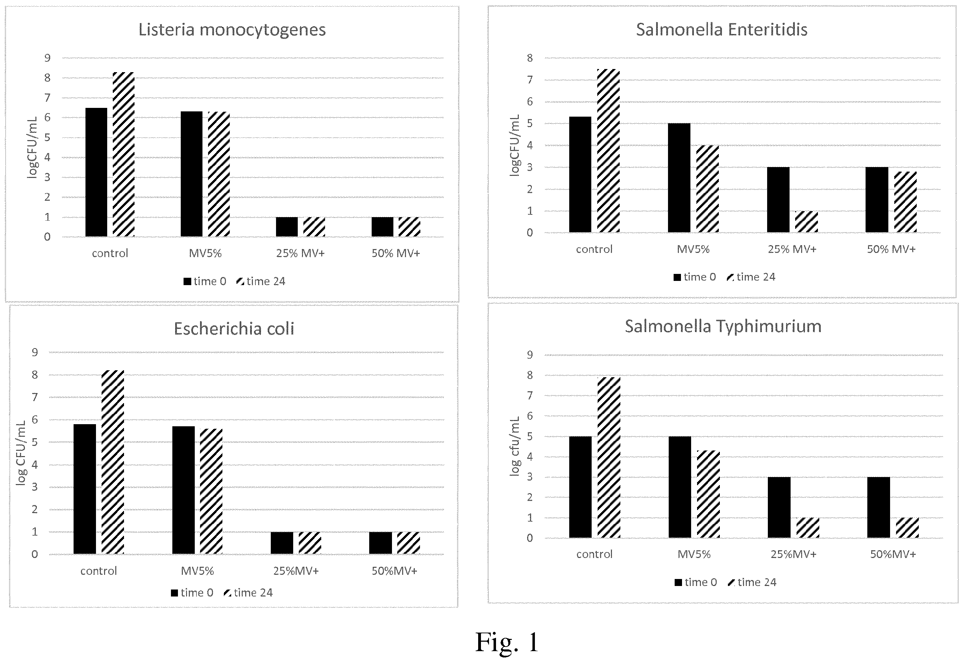

All bacteria tested showed growth in broth in the control. 5% MV could inhibit the growth of the bacteria tested as seen by either a slight decrease or no increase in bacteria amount (Fig. 1). MV+ killed the bacteria tested immediately and at 24 hours. It should be noted that there was no growth observed at the lowest dilution done for the MV+ samples (both 25% and 50% level) which were 10⁻³ for *Salmonella spp.* on time 0 and 10⁻¹ on time 24, 10⁻¹ for *E*. *coli* and *L. monocytogenes* at time 0 and 24.

For *Salmonella Enteritidis*: control grew about 2 logs after 24 hours, while there was one log reduction with 5% MV. When compared to control at 24 hours, 5%MV resulted in 3.34 log reduction, 25% and 50% MV+ had at least 6.4 reduction of *Salmonella Enteritidis.*

For *Salmonella Typhimurium*: control grew 2.86 logs after 24 hours, while 5%MV had about 0.5 log reduction. When compared to control at 24 hours, there was a difference of 3.47 logs between 5%MV and control at 24 hours. The difference between MV+ treated samples and control after 24 hours were at least 6.9 logs.

For *L. monocytogenes*: control grew 1.85 log over 24 hours, while 5% MV inhibited growth since the bacteria level was stable. When compared to control at 24 hours, there was a difference of 2 logs between MV treated and control, and at least 7 logs difference for MV+ treated samples (for both concentrations).

For *E. coli*: control grew 2.22 logs after 24 hours, while 5% MV inhibited the bacterial growth. The difference between control and MV at 24 hours was 2.41 logs. The differences between MV+ treated samples and control at 24 hours were at least 7 logs.

Fig. 1 shows in vitro results of MV and MV+ against *Salmonella Enteritidis*, *Salmonella Typhimurium*, *Listeria monocytogenes*, and *Escherichia coli* for 24 hours at 37°C. Note: For graphical purposes only: *Salmonella Enteritidis* and *Salmonella Typhimurium* on time 0 was put as 3 log because no growth observed at the lowest dilution (10⁻³). Also, for time 0 *Listeria monocytogenes*, *Escherichia coli*, and time 24 for all pathogens, the lowest dilution done was 10¹ so 1 log was put on the graphs.

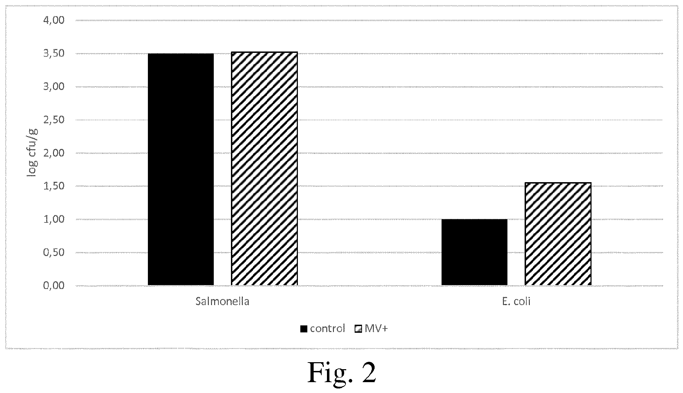

MV and MV+ were shown to have bactericidal or bacteriostatic effect on *Salmonella spp*., *L. monocytogenes* and *E. coli* in vitro. MV+ could reduce the bacteria in a greater extent than MV. MV+ at 50% level reduced *Salmonella Typhimurium* by at least 2.5 log after dipping at room temperature, while *E. coli* seemed to be more resistant to MV+ than *Salmonella Typhimurium* but it was still reduced by about 2 log when compared to control (Fig. 2). This experiment showed that MV+ could reduce *Salmonella Typhimurium* and *E. coli* on chicken parts.

Fig. 2 shows *Salmonella Typhimurium* and *E. coli* counts after dipping of chicken thigh with skin (time zero). Note: For graphical purposes, MV+ *Salmonella Typhimurium* was put as 1 log because the lowest dilution done was 10⁻¹ (no growth observed).

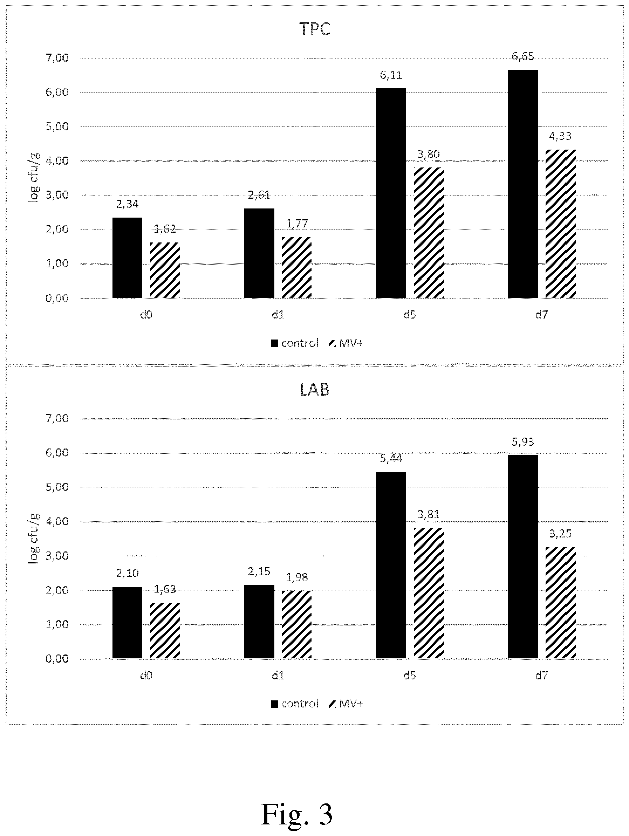

MV+ could be used to increase shelf life of chicken parts by inhibiting the growth of total aerobic count as well as lactic acid bacteria as shown on Fig. 3. Even though all of the samples did not reach the criteria of microbiological spoilage (107 cfu/g), control samples had spoilage smell after 5 days, while MV+ treated samples did not have the spoiled smell after day 7. MV+ treated samples had slight vinegar smell.

Fig. 3 shows Total plate count (TPC) and Lactic acid bacteria (LAB) of raw chicken leg quarter as a function of refrigeration storage time.

The total aerobic count of control grew by 4.32 logs while MV+ grew by 2.71 logs after 7 days. The difference between MV+ and control on day 7 was 2.32 logs. The lactic acid bacteria of control grew by 3.83 logs, while MV+ treated samples grew by 1.62 logs after 7 days. The difference of LAB between control and MV+ was 2.68 logs on day 7. This showed that MV+ samples were better than control in terms of having lower TPC and LAB during the duration of this study.

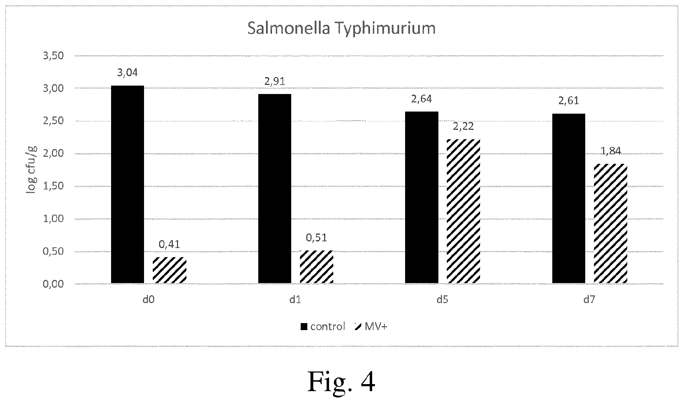

Fig. 4 shows *Salmonella Typhimurium* counts as a function of refrigeration storage time of raw chicken leg quarter.

There was a reduction of 2.63 logs of *Salmonella Typhimurium* with MV+ treatment (at 50% level) on day 0. The Salmonella level was still inhibited after one day of refrigerated storage as shown in Fig. 4. However, after 7 days, there was an increase of 1.43 logs in the MV+ samples while the control was relatively stable during the storage time. One factor that might be contributing to this phenomenon was that there was less competing microflora in the MV+ treated samples. Lactic acid bacteria had been known to produce compounds that could inhibit other bacteria to grow. Albeit the growth during storage, the MV+ treated samples still had lower Salmonella level than the control on day 7. MV+ could be used to control Salmonella in chicken parts. It is recommended that the use of MV+ is combined with other factors that can control microbial growth, such as temperature control, to have hurdle effects.

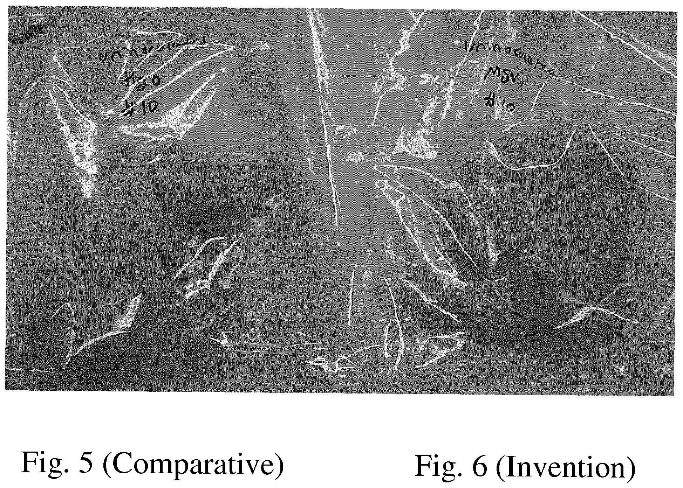

Fig. 5 is a photograph of uninoculated chicken leg quarter after 7 days of refrigerated storage (Control).

Fig. 6 is a photograph of uninoculated chicken leg treated with MV+.

There was no obvious appearance difference on the meat observed between control and MV+ treated samples. The syneresis of control (water treated samples) seemed higher than MV+ samples possibly because the uptake was higher in the control samples during dipping. The color of the syneresis 'blood' was browner (darker color) in control than MV+ uninoculated samples on day 7, which maybe an indication of spoilage (chemical/biochemical) or other changes of meat quality.

These experiments demonstrate that MV+ is effective against pathogens and can increase shelf life of raw poultry when used as carcass wash without affecting the appearance of the poultry.

## Claims

1. A composition for treating, reducing pathogen and bacteria counts and improving shelf life and safety of raw poultry comprising buffered vinegar (BV) and lauramide arginine ethyl ester (LAE), wherein the ratio of BV to LAE is between 10%-90% by wt. BV and 0.2%-10% by weight LAE, the rest is water.

2. The composition according to claim 1, in the form of a wash, the composition further comprising water, wherein the composition comprises less than or equal to 200 ppm of LAE in the final product.

3. A food product comprising raw poultry treated with a composition according to any one of claims 1 to 2.

4. A method of treating a food product comprising raw poultry to increase shelf life and to reduce pathogen and bacteria counts comprising applying to the food product a composition according to any one of claims 1 to 2.

5. The method according to claim 4 comprising dipping the food product in the composition.

6. The use of a composition comprising buffered vinegar (BV) and lauramide arginine ethyl ester (LAE), wherein the ratio of BV to LAE is between 10%-90% by wt. BV and 0.2%-10% by weight LAE, the rest is water, for treating, reducing pathogen and bacteria counts and improving shelf life and safety of raw poultry.

## Patentansprüche

1. Zusammensetzung zur Behandlung, Verringerung der Pathogen- und Bakterienzählungen und Verbesserung der Haltbarkeit und Sicherheit von rohem Geflügel, die gepufferten Essig (BV) und Lauramidargininethylester (LAE) umfasst, wobei das Verhältnis von BV zu LAE zwischen 10 Gew.-%-90 Gew.-% BV und 0,2 Gew.-%-10 Gew.-% LAE liegt, wobei der Rest Wasser ist.

2. Zusammensetzung nach Anspruch 1 in Form einer Waschung, wobei die Zusammensetzung ferner Wasser umfasst, wobei die Zusammensetzung kleiner gleich 200 ppm LAE im Endprodukt umfasst.

3. Lebensmittelprodukt, das rohes Geflügel umfasst, das mit einer Zusammensetzung nach einem der Ansprüche 1 bis 2 behandelt ist.

4. Verfahren zum Behandeln eines Lebensmittelprodukts, das rohes Geflügel umfasst, um die Haltbarkeit zu verbessern und Pathogen- und Bakterienzählungen zu verringern, das das Anwenden einer Zusammensetzung nach einem der Ansprüche 1 bis 2 auf das Lebensmittelprodukt umfasst.

5. Verfahren nach Anspruch 4, das das Eintauchen des Lebensmittelprodukts in die Zusammensetzung umfasst.

6. Verwendung einer Zusammensetzung, die gepufferten Essig (BV) und Lauramidargininethylester (LAE) umfasst, wobei das Verhältnis von BV zu LAE zwischen 10 Gew.-%-90 Gew.-% BV und 0,2 Gew.-%-10 Gew.-% LAE liegt, wobei der Rest Wasser ist, zur Behandlung, Verringerung von Pathogen- und Bakterienzählungen und Verbesserung der Haltbarkeit und Sicherheit von rohem Geflügel.

## Revendications

1. Composition pour traiter, réduire le nombre d'agents pathogènes et de bactéries et améliorer la durée de conservation et la sécurité de la volaille crue comprenant du vinaigre tamponné (BV) et de l'ester éthylique d'arginine de lauramide (LAE), où le rapport du BV sur le LAE est compris entre 10 %-90 % en poids de BV et 0,2 %-10 % en poids de LAE, le reste étant de l'eau.

2. Composition selon la revendication 1, sous la forme d'un lavage, la composition comprenant en outre de l'eau, où la composition comprend 200 ppm de LAE ou moins dans le produit final.

3. Produit alimentaire comprenant de la volaille crue traitée avec une composition selon l'une quelconque des revendications 1 à 2.

4. Procédé de traitement d'un produit alimentaire comprenant de la volaille crue pour augmenter la durée de conservation et pour réduire le nombre d'agents pathogènes et de bactéries, comprenant l'application au produit alimentaire d'une composition selon l'une quelconque des revendications 1 à 2.

5. Procédé selon la revendication 4, comprenant le fait de tremper le produit alimentaire dans la composition.

6. Utilisation d'une composition comprenant du vinaigre tamponné (BV) et de l'ester éthylique d'arginine de lauramide (LAE), où le rapport du BV sur le LAE est compris entre 10 %-90 % en poids de BV et 0,2 %-10 % en poids de LAE, le reste étant de l'eau, pour traiter, réduire le nombre d'agents pathogènes et de bactéries et améliorer la durée de conservation et la sécurité de la volaille crue.
